# EUROPEAN PATENT APPLICATION

(11) **EP 4 436 203 A1**
(43) Date of publication of application: **25.09.2024**
(21) Application number: 23894200.7
(22) Date of filing: 21.08.2023
(51) Int. Cl.: H04R 1/00, A47C 7/62, B60N 2/879, H04R 1/02

(54) **BONE CONDUCTION SPEAKER UNIT AND HEADREST INCORPORATING SAME**

(30) Priority: 25.11.2022 JP 2022188207
(71) Applicant: Temco Japan Co., Ltd., Tokyo 168-0062 (JP)
(72) Inventor: TERASAWA Yasuhide, Tokyo 168-0062 (JP)
(74) Representative: Novagraaf Technologies
(86) International application number: PCT/JP2023/030021
(87) International publication number: WO 2024/111184

(57) **Abstract**

[Object] To provide a bone conduction speaker unit that when incorporated in a headrest, is able to suppress an unwanted event such as sound ringing or sound leakage as much as possible, which inevitably occurs in a bone conduction speaker, and can be suitably incorporated in a headrest and a headrest incorporating the bone conduction speaker unit.

[Solving Means] A bone conduction speaker unit includes a base frame 2, a low-resilience annular body 3 fixed to the top surface of the base frame 2, a damping material 4 fitted into and supported by the base frame 2, a bone conduction speaker body 5 disposed on the damping material 4 so as to be surrounded by the low-resilience annular body 3, and a contact 6 disposed on the low-resilience annular body 3 so as to cover the bone conduction speaker body 5. The contact 6 is configured to contact the vibration surface of the bone conduction speaker body 5 when the contact 5 receives a load and to leave the vibration surface of the bone conduction speaker body 5 when the load is eliminated.

## Description

### Technical Field

The present invention relates to a bone conduction speaker unit and a headrest incorporating the same. More specifically, the present invention relates to a bone conduction speaker unit that can be suitably incorporated in headrests such as those of passenger seats in various transportation facilities, including automobiles, and those of seats in theaters, movie theaters, theme parks, and the like and a headrest incorporating the bone conduction speaker unit.

### BACKGROUND ART

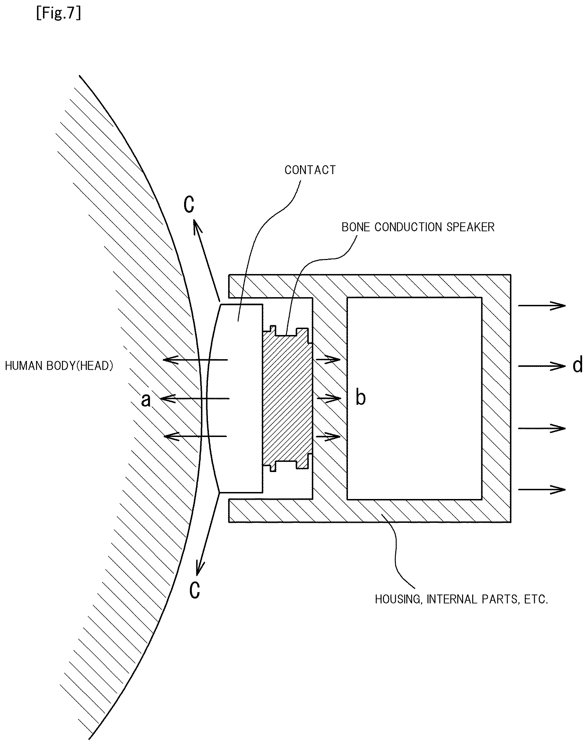

Generally, bone conduction speakers aim to transmit produced vibration to a human body and are being widely used as devices that effectively transmit sound to a hearing-impaired person in a high-noise environment or under certain conditions. However, vibration produced by a bone conduction speaker body is transmitted also to a housing or the like holding the speaker. For this reason, it is not rare that an unwanted event such as sound ringing or sound leakage occurs. FIG. 7 shows such a situation. An arrow a shows vibration that propagates to a human body as a sound signal, an arrow b shows vibration that propagates to a housing as a reaction force, an arrow c shows sound leakage that occurs when a contact vibrates air, and an arrow d shows sound ringing that occurs when the arrow b resonates the housing or vibrates air.

Incorporation of such a bone conduction speaker in the headrest of an automobile has been proposed. For example, Japanese Unexamined Patent Application Publication No. 2018-125829 (Patent Literature 1) discloses an acoustic device for use in seats that incorporates a bone conduction speaker in a headrest partially swelled so that the back of the head of a seated passenger is always in close contact with the headrest. Japanese Utility Model Registration Publication No. 3219108 (Patent Literature 2) discloses a bone conduction speaker-incorporated headrest. In this headrest, the front surface of a headrest exterior body in which a bone conduction speaker is disposed consists of an elastic member so that the head of a seated person can be covered by the headrest and reliably embedded in the headrest. Thus, pickup of noise inside and outside the cabin can be reduced, and sound from the bone conduction speaker can be clearly transmitted to the seated person.

However, in the invention of Patent Literature 1, the bone conduction speaker is simply incorporated in the headrest. In the invention of Patent Literature 2, the bone conduction speaker is simply disposed in the headrest exterior body whose front surface consists of the elastic member. These Patent Literatures do not disclose the configuration of a bone conduction speaker that can be suitably incorporated in the headrest nor mention how the bone conduction speaker is disposed. Moreover, these Patent Literatures give no consideration to suppressing the above-mentioned unwanted events specific to bone conduction speakers, such as sound ringing and sound leakage.

### Citation List

### Patent Literature

Patent Literature 1: Japanese Unexamined Patent Application Publication No. 2018-125829
Patent Literature 2: Japanese Utility Model Registration Publication No. 3219108

### SUMMARY OF INVENTION

### Technical Problem

As described above, in the case of the headrests incorporating the bone conduction speaker described in the Patent Literatures, the bone conduction speaker is simply disposed in the headrest. The Patent Literatures do not mention how a bone conduction speaker having what configuration is disposed nor disclose means for suppressing unwanted events such as sound ringing and sound leakage, which inevitably occur on the bone conduction speaker.

In view of the foregoing, an object of the present invention is to provide a bone conduction speaker unit that when incorporated in a headrest, is able to suppress unwanted events such as sound ringing and sound leakage to the extent possible, which inevitably occur on a bone conduction speaker, and can be suitably incorporated in a headrest and a headrest incorporating the bone conduction speaker unit.

### Solution to Problem

To solve the above problems, the present invention according to claim 1 provides a bone conduction speaker unit. The bone conduction speaker unit includes a base frame, a low-resilience annular body fixed to a top surface of the base frame, a damping material fitted into the base frame, a bone conduction speaker body disposed on the damping material so as to be surrounded by the low-resilience annular body, and a contact disposed on the low-resilience annular body so as to cover the bone conduction speaker body. The contact contacts a top surface serving as a vibration surface of the bone conduction speaker body when the contact receives a load. The contact leaves the vibration surface of the bone conduction speaker body when the load is eliminated.

In one embodiment, the contact contacts the top surface serving as the vibration surface of the bone conduction speaker body when the contact receives the load and presses the low-resilience annular body. The contacts leaves the vibration surface of the bone conduction speaker body when the load is eliminated and the low-resilience annular body is restored due to elasticity thereof.

In one embodiment, the contact has elasticity. The contact contacts the top surface serving as the vibration surface of the bone conduction speaker body when the contact receives the load and presses the low-resilience annular body while being deformed. The contact leaves the vibration surface of the bone conduction speaker body when the load is eliminated and the contact and the low-resilience annular body are restored due to elasticity thereof.

In one embodiment, the contact includes a convex portion configured to contact the top surface serving as the vibration surface of the bone conduction speaker body when the contact receives the load and to leave the vibration surface of the bone conduction speaker body when the load is eliminated.

In one embodiment, the contact includes a pair of legs fixed to the low-resilience annular body and a bridge connecting the legs so as to swell outward. The bridge has a cross shape in a plan view and is hollowed out as much as possible.

To solve the above problems, the present invention according to claim 7 provides a headrest incorporating the bone conduction speaker unit of any one of claims 1 to 6. An opening is formed on a skin of a surface of the headrest to be contacted by back of a head. The opening is covered with a ventilation cover. The bone conduction speaker unit is disposed inside the opening such that the contact is always in contact with the ventilation cover.

### Advantageous Effects of Invention

In the bone conduction speaker unit according to the present invention thus configured, the bone conduction speaker body is mounted on the damping material serving as a weight. Thus, vibration in a direction opposite to the vibration surface is reduced. Also, the contact is formed such that the area of a surface of the contact to be contacted by a human body is reduced as much as possible. Thus, a sound ringing suppression effect is obtained.

In the headrest incorporating the bone conduction speaker unit according to the present invention, only a portion in contact with the contact of the incorporated bone conduction speaker unit consists of the ventilation cover made of a breathable material. Thus, the propagation of vibration to the skin is suppressed. Thus, this headrest produces advantageous effects of reducing sound ringing caused by the vibration of the skin and releasing heat in addition to the above advantageous effect.

### BRIEF DESCRIPTION OF DRAWINGS

FIG. 1 is a perspective view of an embodiment of a bone conduction speaker unit according to the present invention.
FIG. 2 is a plan view of the embodiment of the bone conduction speaker unit according to the present invention. FIG. 3 is a longitudinal sectional view of the embodiment of the bone conduction speaker unit according to the present invention.
FIGS. 4A and 4B are drawings showing the operation of the bone conduction speaker unit according to the present invention.
FIG. 5 is a perspective view showing an example configuration of a headrest incorporating the bone conduction speaker unit according to the present invention.
FIG. 6 is a schematic longitudinal sectional view showing the example configuration of the headrest incorporating the bone conduction speaker unit according to the present invention.
FIG. 7 is a drawing showing a problem with a conventional bone conduction speaker unit.

### DESCRIPTION OF EMBODIMENTS

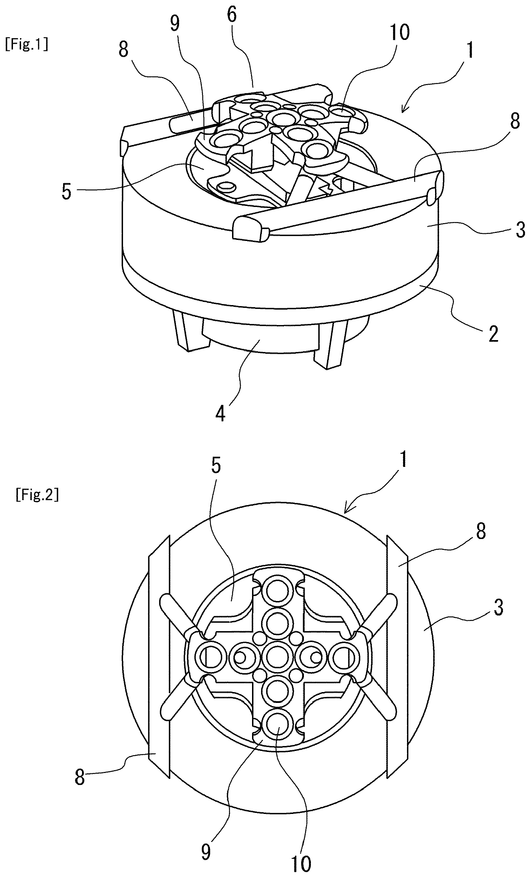

An embodiment of the present invention will be described in detail with reference to the accompanying drawings. As shown in FIGS. 1 to 3, a bone conduction speaker unit 1 according to the present invention includes an annular base frame 2, a low-resilience annular body 3 fixed to the top surface of the base frame 2, a damping material 4 fitted into and supported by the base frame 2, a bone conduction speaker body 5 disposed on the damping material 4 so as to be surrounded by the low-resilience annular body 3, and a contact 6 disposed on the low-resilience annular body 3 so as to cover the top surface serving as a vibration surface of the bone conduction speaker body 5. For example, low-resilience urethan sponge can be used as the low-resilience annular body 3.

The configuration of the bone conduction speaker body 5 itself is a general one and therefore will not be described in detail. Note that the top surface of the bone conduction speaker body 5 serves as a vibration surface (diaphragm). The illustrated base frame 2 has four legs for holding the damping material 4. Generally, the base frame 2 is made of a hard resin, and the damping material 4 is made of a damping metal material such as brass.

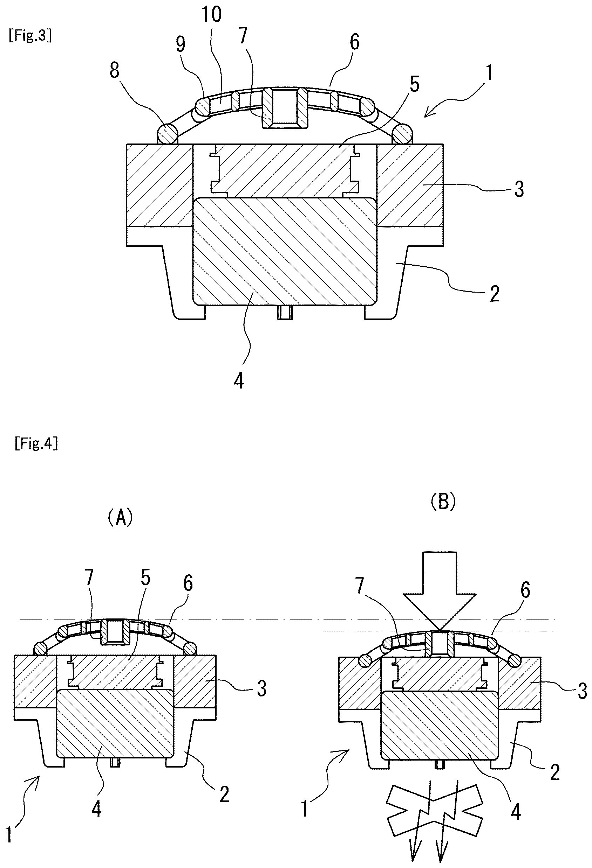

The contact 6 contacts the vibration surface of the bone conduction speaker body 5 when pressed and leaves the vibration surface of the bone conduction speaker body 5 when the pressing force is released. It is preferable to dispose a convex portion 7 on the inner top surface of the contact 6 so that the contact 6 reliably contacts and leaves the vibration surface of the bone conduction speaker body 5 (FIGS. 3, 4). For example, the contact 6 includes a pair of legs 8 fixed to the low-resilience annular body 3 and a bridge 9 connecting the legs 8 so as to swell outward (FIGS. 1, 2), and the convex portion 7 is disposed on the back surface of the central portion of the bridge. The illustrated bridge 9 has a cross shape in a plan view and is hollowed out as much as possible (hollowed-out portions 10). Such disposition of as many hollowed-out portions 10 as possible aims to reduce sound leakage by reducing the surface area in the vibration direction and reducing air vibration (to reduce vibration in the direction of the arrow c in FIG. 7).

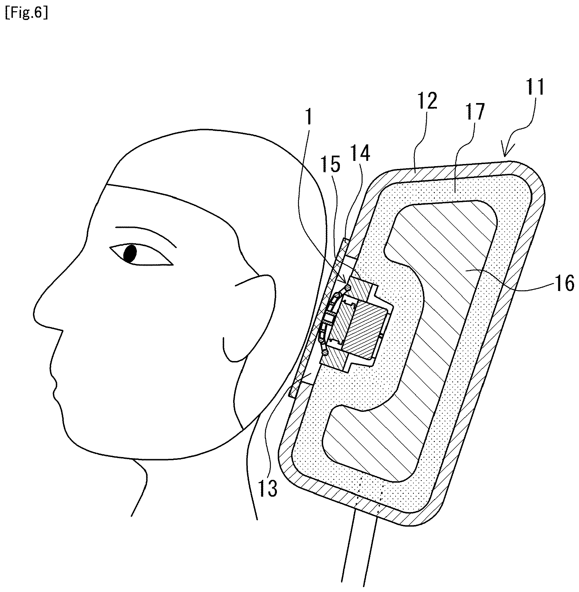

Generally, the contact 6 is made of a stiff material such as a hard resin. When the contact 6 receives a load and presses the low-resilience annular body 3, the convex portion 7 contacts the top surface serving as a vibration surface of the bone conduction speaker body 5 (see FIGS. 4B and 6). When the load is eliminated and the low-resilience annular body 3 is restored due to its elasticity, the convex portion 7 leaves the vibration surface of the bone conduction speaker body 5 (see FIGS. 3 and 4A).

In another embodiment, the contact 6 has elasticity. In this case, when the contact 6 receives a load and presses the low-resilience annular body 3 while being deformed, the contact 6 contacts the vibration surface of the bone conduction speaker body 5. When the load is eliminated, the contact 6 leaves the vibration surface of the bone conduction speaker body 5 due to the synergy between the elastic restoration of the contact 6 and the elastic restoration of the low-resilience annular body 3.

In the case of the above configuration, even when a sound signal is electrically being inputted into the bone conduction speaker body 5, the contact 6 (convex portion 7) and the bone conduction speaker body 5 are spaced from each other (see FIGS. 3 and 4A) unless the contact 6 is in use, that is, unless a human body contacts the contact 6. For this reason, the contact 6 itself does not vibrate.

As described above, vibration produced by the bone conduction speaker body 5 is transmitted also to a housing or the like holding the bone conduction speaker body 5. For this reason, it is not rare that an unwanted event such as sound ringing or sound leakage occurs. Specifically, vibration (the arrow b in FIG. 7) that propagates to the housing occurs as the reaction force of vibration (the arrow a in FIG. 7) that propagates to a human body as a sound signal, and sound ringing (the arrow d in FIG. 7) occurs due to the resonance of the housing or the vibration of air shown by the arrow b. In the case of the bone conduction speaker unit 1 according to the present invention, the damping material 4 made of a metal material such as brass having damping properties is fixed to the base frame 2, which is located on a side opposite to the vibration surface of the bone conduction speaker body 5. Thus, the vibration transmitted to the base frame 2 is reduced. Thus, resonance or sound ringing caused by the vibration of the base frame 2 (and the damping material 4) is reduced.

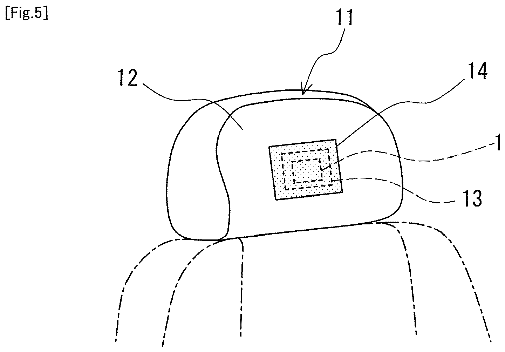

A headrest 11 incorporating a bone conduction speaker unit according to the present invention incorporates the bone conduction speaker unit 1. The skin 12 of a surface to be contacted by the back of the head of the user of the headrest 11 is partially opened. The opening 13 is covered with a ventilation cover 14 made of a breathable material such as a mesh material. The bone conduction speaker unit 1 is disposed on the opening 13 such that the contact 6 is always in contact with the ventilation cover 14 (FIGS. 5, 6). Specifically, the bone conduction speaker unit 1 is closely fitted into a concave portion 15 formed in a cushion material 17 inserted into the skin 12, and a space around the bone conduction speaker unit 1 is packed with another cushion material as necessary. While a skeleton 16 is disposed inside in a shown example, it may not be disposed. Note that wiring extending from the bone conduction speaker unit 1 is not shown.

As described above, the opening 13 disposed on the skin 12 of the portion to be contacted by a human body (the back of the head) is covered with the ventilation cover 14, and the bone conduction speaker unit 1 is disposed inside the opening 13 such that the contact 6 is always in contact with the ventilation cover 14. This configuration makes it difficult for the vibration of the contact 6 to propagate to the skin 12 and thus reduces sound ringing caused by the vibration of the skin 12. Moreover, the ventilation cover 14 has breathability. Thus, heat generated by the activation of the bone conduction speaker body 5 is released.

### Industrial Applicability

In the bone conduction speaker unit according to the present invention configured as described above, the bone conduction speaker unit is mounted on the damping material serving as a weight. Thus, vibration in the opposite direction is reduced. Also, the contact is formed such that the area of the surface of the contact to be contacted by a human body is reduced as much as possible. Thus, a sound ringing suppression effect is obtained. In the headrest incorporating the bone conduction speaker unit according to the present invention, only the portion in contact with the incorporated bone conduction speaker unit consists of the ventilation cover made of the breathable material. This configuration produces effects of suppressing the propagation of vibration to the skin and thus reducing sound ringing caused by the vibration of the skin, as well as releasing heat, in addition to the above effect. For these reasons, the bone conduction speaker unit according to the present invention and the headrest incorporating the bone conduction speaker unit have high industrial applicability.

## Claims

1. A bone conduction speaker unit comprising:
a base frame;
a low-resilience annular body fixed to a top surface of the base frame;
a damping material fitted into the base frame;
a bone conduction speaker body disposed on the damping material so as to be surrounded by the low-resilience annular body; and
a contact disposed on the low-resilience annular body so as to cover the bone conduction speaker body,
wherein the contact contacts a top surface serving as a vibration surface of the bone conduction speaker body when the contact receives a load, and
wherein the contact leaves the vibration surface of the bone conduction speaker body when the load is eliminated.

2. The bone conduction speaker unit of claim 1,
wherein the contact contacts the top surface serving as the vibration surface of the bone conduction speaker body when the contact receives the load and presses the low-resilience annular body, and
wherein the contacts leaves the vibration surface of the bone conduction speaker body when the load is eliminated and the low-resilience annular body is restored due to elasticity thereof.

3. The bone conduction speaker unit of claim 1,
wherein the contact has elasticity,
wherein the contact contacts the top surface serving as the vibration surface of the bone conduction speaker body when the contact receives the load and presses the low-resilience annular body while being deformed, and
wherein the contacts leaves the vibration surface of the bone conduction speaker body when the load is eliminated and the contact and the low-resilience annular body are restored due to elasticity thereof.

4. The bone conduction speaker unit of any one of claims 1 to 3, wherein the contact comprises a convex portion configured to contact the top surface serving as the vibration surface of the bone conduction speaker body when the contact receives the load and to leave the vibration surface of the bone conduction speaker body when the load is eliminated.

5. The bone conduction speaker unit of claim 1, wherein the contact comprises a pair of legs fixed to the low-resilience annular body and a bridge connecting the legs so as to swell outward.

6. The bone conduction speaker unit of claim 5, wherein the bridge has a cross shape in a plan view and is hollowed out as much as possible.

7. A headrest incorporating the bone conduction speaker unit of any one of claims 1 to 6,
wherein an opening is formed on a skin of a surface of the headrest to be contacted by back of a head,
wherein the opening is covered with a ventilation cover, and
wherein the bone conduction speaker unit is disposed inside the opening such that the contact is always in contact with the ventilation cover.
